# EUROPÄISCHE PATENTSCHRIFT

(11) **EP 2 956 333 B1**
(45) Veröffentlichungstag und Bekanntmachung des Hinweises auf die Patenterteilung: **15.06.2016**
(21) Anmeldenummer: 14704163.6
(22) Anmeldetag: 13.02.2014
(51) Int. Cl.: B60N 2/20, B60N 2/235

(54) **RASTBESCHLAG FÜR EINEN FAHRZEUGSITZ SOWIE FAHRZEUGSITZ**
DETENT FITTING FOR A VEHICLE SEAT, AND VEHICLE SEAT
FERRURE À CRAN D'ARRÊT POUR UN SIÈGE DE VÉHICULE ET SIÈGE DE VÉHICULE

(30) Priorität: 14.02.2013 DE 102013002819; 25.02.2013 DE 102013003442; 21.10.2013 DE 102013221307; 16.12.2013 DE 102013226002
(43) Veröffentlichungstag der Anmeldung: 23.12.2015
(73) Patentinhaber: Johnson Controls Components GmbH & Co. KG, 67657 Kaiserslautern (DE)
(72) Erfinder: THIEL, Peter, 42899 Remscheid (DE)
(74) Vertreter: Liedhegener, Ralf
(86) Internationale Anmeldenummer: PCT/EP2014/052835
(87) Internationale Veröffentlichungsnummer: WO 2014/125032

(56) Entgegenhaltungen:
- DE-A1-102008 026 176

## Beschreibung

Die Erfindung betrifft einen Rastbeschlag mit einem ersten Beschlagteil und einem zweiten Beschlagteil, welche relativ zueinander verdrehbar sind und mit Riegeln, welche in einem der beiden Beschlagteile zwischen einem verriegelten Zustand und einem entriegelten Zustand beweglich geführt sind, und welche im verriegelten Zustand mit einem Zahnkranz des anderen der beiden Beschlagteile zusammenwirken, um einen ersten Verriegelungsmechanismus des Rastbeschlags zu verriegeln, und einem dritten Beschlagteil, welches relativ zum ersten Beschlagteil schwenkbar an dem ersten Beschlagteil gelagert ist, wobei das dritte Beschlagteil mittels einer in einem ersten Gelenkpunkt an dem dritten Beschlagteil gelagerten Klinke mit einer an dem ersten Beschlagteil befestigten Rastplatte oder dem ersten Beschlagteil verriegelbar ist, wodurch der Rastbeschlag einen zweiten Verriegelungsmechanismus aufweist. Die Erfindung betrifft des Weiteren einen Fahrzeugsitz mit den Merkmalen des Anspruchs 15.

### Stand der Technik

Aus der EP 0 705 727 B1 ist ein Beschlagsystem für einen Fahrzeugsitz mit einer Freischwenkfunktion und einer Memorisierung der Lehnenneigung bekannt. Das Beschlagsystem umfasst einen ersten Rastbeschlag, einen zweiten Rastbeschlag und ein Übertragungselement zwischen den beiden Rastbeschlägen. Jeder Rastbeschlag weist ein Wellenstück auf, dessen Drehung den Rastbeschlag entriegelt. Zur Neigungseinstellung einer Lehne wird mittels eines ersten Bedienelements am zweiten Rastbeschlag das Wellenstück gedreht und ein drehfest darauf sitzender erster Hebel geschwenkt. Der erste Hebel nimmt einen zweiten Hebel mit, welcher drehfest mit dem Übertragungselement verbunden ist. Der schwenkende zweite Hebel dreht das Übertragungselement, welcher die Drehbewegung auf das Wellenstück des ersten Rastbeschlags überträgt. Beide Rastbeschläge entriegeln. Zum Freischwenken der Lehne ist dem zweiten Rastbeschlag eine Freischwenkvorrichtung als zweiter Verriegelungsmechanismus des zweiten Rastbeschlags zugeordnet, welche mittels einer schwenkbaren Klinke verriegelbar ist. Mittels eines zweiten Bedienelementes wird die Klinke geöffnet, wobei die aufschwenkende Klinke mittels eines Seilzugs den zweiten Hebel schwenkt. Der schwenkende zweite Hebel dreht das Übertragungselement, welcher die Drehbewegung auf das Wellenstück des ersten Rastbeschlags überträgt. Der erste Rastbeschlag und die dem zweiten Rastbeschlag zugeordnete Freischwenkvorrichtung entriegeln, während der zweite Rastbeschlag verriegelt bleibt. Mittels des beschriebenen Beschlagsystems wird eine Memorisierung der Lehnenneigung erreicht. Beim Freischwenken der Lehne und anschließendem Zurückschwenken wird die zuvor eingestellte Lehnenneigung wieder eingenommen. Die Freischwenkfunktion erleichtert den Zugang zu einer hinteren Sitzreihe, insbesondere bei zweitürigen Fahrzeugen.

Ein Beschlagsystem mit einer Memorisierung der Lehnenneigung und einer zusätzlichen Freischwenkvorrichtung an einem von zwei Rastbeschlägen ist auch aus der DE 10 2008 026 176 A1 bekannt.

Aus der DE 20 2010 015 093 U1 ist ein weiteres Beschlagsystem für einen Fahrzeugsitz mit einer Freischwenkfunktion und einer Memorisierung der Lehnenneigung bekannt. Ein Einstellbeschlag zur Neigungseinstellung der Lehne und ein Freischwenkbeschlag sind als separate Rastbeschläge ausgebildet und bezüglich der Lehnenschwenkachse in axialer Richtung nebeneinander angeordnet. Eine solche Anordnung benötigt in axialer Richtung den Bauraum für zwei Rastbeschläge nebeneinander.

Ein Getriebebeschlag mit einer Freischwenkfunktion ist aus der US 7,571,962 B2 bekannt. Ein erstes Beschlagteil und ein zweites Beschlagteil stehen miteinander in Getriebeverbindung, um die Neigung der Lehne einzustellen. Auf einem am ersten Beschlagteil befestigten Lagerring ist das dritte Beschlagteil schwenkbar gelagert. Ferner sitzt ein separat ausgebildetes Rastelement auf dem Lagerring und ist an diesem befestigt, so dass es fest mit dem ersten Beschlagteil verbunden ist. Eine am dritten Beschlagteil schwenkbar gelagerte, gezahnte Klinke verriegelt mit dem Rastelement, welches hierzu in einem radial abstehenden Bereich ebenfalls gezahnt ist. Wird die Klinke geöffnet, ist die Lehne freischwenkbar. Das Freischwenken dient insbesondere dem erleichterten Zugang von Passagieren zu einer hinteren Sitzreihe.

### Aufgabe

Der Erfindung liegt die Aufgabe zu Grunde, einen Rastbeschlag mit zusätzlicher Freischwenkfunktion, insbesondere für ein Beschlagsystem der eingangs genannten Art, zu verbessern, insbesondere eine sichere, spielfreie und zugleich gewichts- und bauraumoptimierte Verriegelung für die eine zusätzliche Freischwenkfunktion des Rastbeschlags zur Verfügung zu stellen.

### Lösung

Diese Aufgabe wird erfindungsgemäß durch einen Rastbeschlag mit den im Anspruch 1 genannten Merkmalen und einen Fahrzeugsitz nach Anspruch 15 gelöst.

Ausgestaltungen, welche einzeln oder in Kombination miteinander eingesetzt werden können, sind Gegenstand der Unteransprüche.

Aufgrund der zusätzlichen Freischwenkfunktion weist der Rastbeschlag zwei Verriegelungsmechanismen auf. Ein erster Verriegelungsmechanismus dient einer Neigungseinstellung einer Lehne des Fahrzeugsitzes innerhalb eines Komforteinstellbereiches; ein zweiter Verriegelungsmechanismus dient einem zusätzlichen Freischwenken der Lehne bei verriegeltem ersten Verriegelungsmechansimus, insbesondere um den Zutritt zu einer hinteren Sitzreihe zu erleichtern.

Dadurch, dass das dritte Beschlagteil, ein in einem zweiten Gelenkpunkt an dem dritten Beschlagteil gelagerter Sperrnocken, eine in einem dritten Gelenkpunkt mit dem Sperrnocken und in einem vierten Gelenkpunkt mit der Klinke gelenkig verbundene Koppel und die Klinke eine Viergelenkkette definieren, steht ein kosten- und gewichtsoptimierter Rastbeschlag mit einer zusätzlichen Freischwenkfunktion zur Verfügung. Der erfindungsgemäße Rastbeschlag kann sowohl einen Einstellbeschlag zur Neigungseinstellung der Lehne als auch einen Freischwenkbeschlag in dem aus der DE 20 2010 015 093 U1 bekannten Beschlagsystem ersetzen und beansprucht dabei weniger Bauraum.

Ein Beschlagsystem, insbesondere für die Anbindung der Lehne eines Fahrzeugsitzes an ein Sitzteil, kann einen oder mehrere, insbesondere zwei erfindungsgemäße Rastbeschläge umfassen.

Die Verriegelung der Freischwenkfunktion erfolgt mittels eines Klinkensystems, bei welchem ein in einem zweiten Gelenkpunkt an dem dritten Beschlagteil gelagerter Sperrnocken, eine in einem dritten Gelenkpunkt mit dem Sperrnocken und in einem vierten Gelenkpunkt mit der Klinke gelenkig verbundene Koppel und die Klinke eine Viergelenkkette definieren. Dadurch kann eine Verriegelung der Klinke im Bereich einer Totpunktlage erfolgen, in der öffnend auf die Klinke wirkende Kräfte, insbesondere Crashkräfte besonders einfach, aber wirkungsvoll abgestützt werden können.

Die Getriebeglieder der Viergelenkkette müssen nicht über reine Drehgelenke miteinander verbunden sein. Bevorzugt ist einer der Gelenkpunkte der Viergelenkkette als Drehschubgelenk ausgebildet und die übrigen Gelenkpunkte als reine Drehgelenke. Dadurch lässt sich eine Verriegelung der Klinke über die Totpunktlage hinaus erreichen. Besonders wirkungsvoll ist es, wenn der zweite Gelenkpunkt als Drehschubgelenk ausgebildet ist und die übrigen Gelenkpunkte als Drehgelenke ausgebildet sind.

Ein zwangsläufig aufgrund des Drehschubgelenkes vorhandenes Spiel in der Viergelenkkette hat keine negativen Auswirkungen auf die Spielfreiheit der Verriegelung im Normalbetrieb des Sitzes, wenn eine Feder die Viergelenkkette, insbesondere den Sperrnocken, in Richtung der verriegelten Position der Klinke vorspannt und den Sperrnocken in Anlage an die Klinke schwenkt. Ein als Spannfläche vorzugsweise innerhalb der Selbsthemmung ausgelegter Verriegelungsnocken der Klinke wird dadurch gegen die Verriegelungsfläche des ersten Beschlagteils gespannt, ohne dass das Drehschubgelenk durch eine maximale Auslenkung in der Translationsrichtung spielfrei gestellt werden muss.

Die Totpunktlage lässt sich besonders einfach erzeugen, indem im verriegelten Zustand der Klinke der dritte Gelenkpunkt auf einer imaginären Verbindungslinie zwischen dem zweiten Gelenkpunkt und dem vierten Gelenkpunkt liegt oder der dritte Gelenkpunkt zwischen der Verbindungslinie und der Klinke liegt.

Der Rastbeschlag wird vorzugsweise entriegelt, indem der Sperrnocken zum Entriegeln der Klinke entgegen der Kraft der Feder geschwenkt wird und dabei die Viergelenkkette die Klinke in Richtung auf deren entriegelte Position bewegt. Dazu umfasst der Sperrnocken einen Achsstummel, der unter Bildung des zweiten Gelenkpunkts in einer Öffnung des dritten Beschlagteils drehbar gelagert ist. Der Achsstummel weist bevorzugt eine profilierte Schnittstelle, insbesondere eine Polygonform, zur wenigstens mittelbaren Verbindung mit einem Handhebel an der Lehne des Fahrzeugsitzes auf.

Vorzugsweise ist ein Lagerring mit dem ersten Beschlagteil verbunden, vorzugsweise fest verbunden, insbesondere verschweißt. Der Lagerring lagert das dritte Beschlagteil relativ zu dem ersten Beschlagteil. Dadurch muss das dritte Beschlagteil nicht unmittelbar am ersten Beschlagteil gelagert sein, was die Integration einer Freischwenkfunktion auch an einen an sich bekannten scheibenförmigen Rastbeschlag, der ursprünglich ohne Freischwenkfunktion konzipiert wurde, deutlich erleichtert.

Vorzugsweise kann ein gegebenenfalls vorhandenes Spiel in dem Rastbeschlag dadurch eingestellt werden, dass die Lagerfläche eines Lagerrings und die Innenfläche einer Lageröffnung in dem dritten Beschlagteil derart unrund ausgebildet sind, dass durch Verdrehen des Lagerrings vor dessen Befestigung an dem ersten Beschlagteil das Spiel einstellbar ist. Eine solche Art der Einstellung des Spiels ist beispielsweise aus der DE 100 41 604 B4 bekannt.

### Figuren und Ausführungsformen der Erfindung

Im Folgenden ist die Erfindung anhand eines in den Zeichnungen dargestellten vorteilhaften Ausführungsbeispiels näher erläutert. Die Erfindung ist jedoch nicht auf dieses Ausführungsbeispiel beschränkt. Es zeigen:

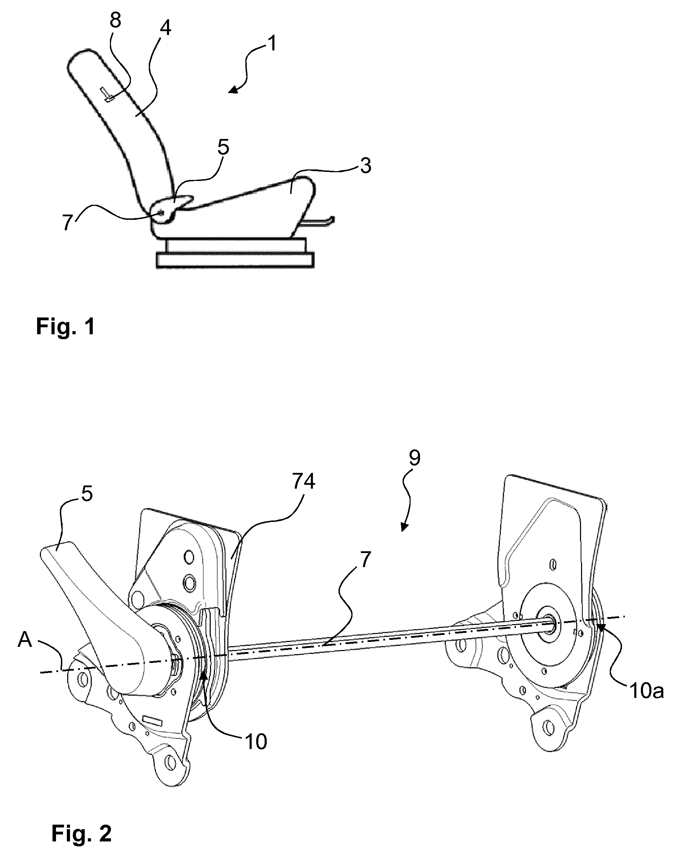

- Fig. 1:: eine schematische Darstellung eines Fahrzeugsitzes,
- Fig. 2:: eine perspektivische Darstellung eines Beschlagsystems des Fahrzeugsitzes aus Fig. 1,

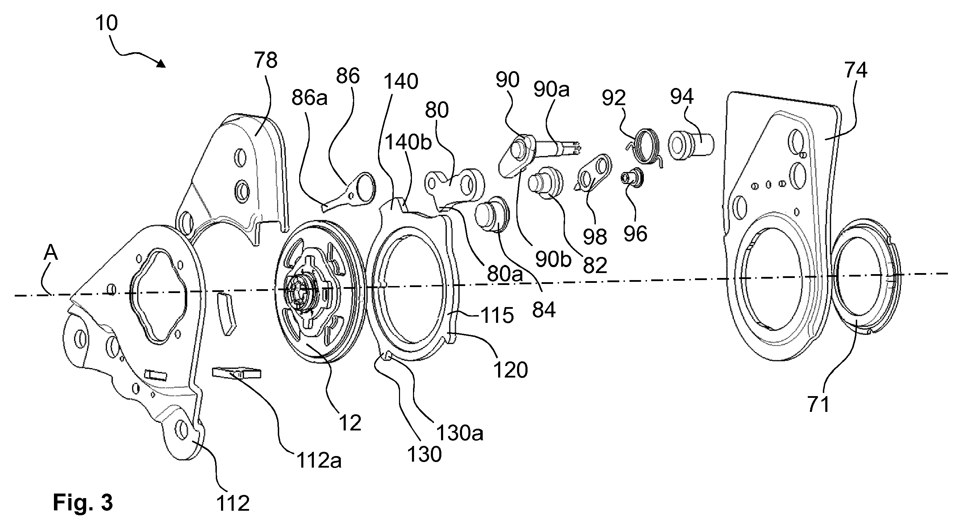

- Fig. 3:: eine Explosionsdarstellung eines Rastbeschlages inklusive Adapter, insbesondere eines zweiten Verriegelungsmechanismus für die Freischwenkfunktion des Rastbeschlags,

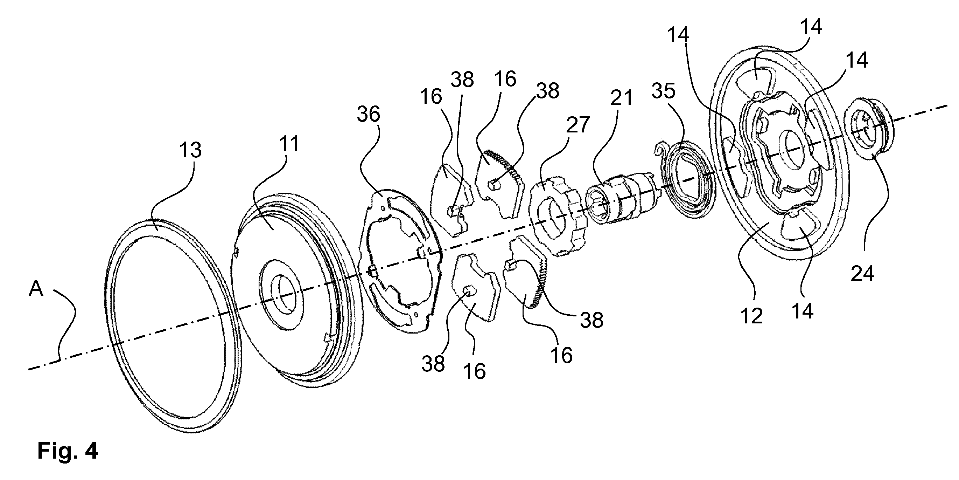

- Fig. 4:: eine Explosionsdarstellung einer scheibenförmigen Einheit mit einem ersten Verriegelungsmechanismus des Rastbeschlags mit vereinfacht dargestelltem ersten Beschlagteil,

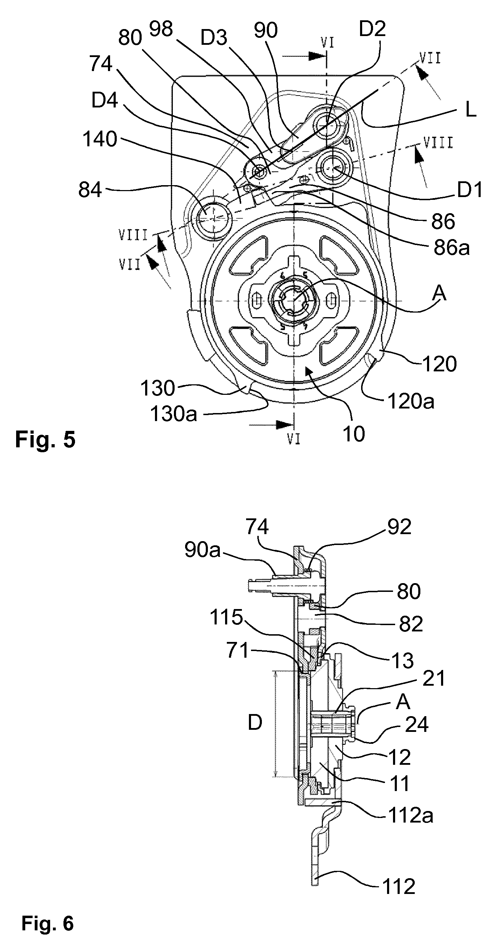

- Fig. 5:: eine Draufsicht auf den Rastbeschlag,
- Fig. 6:: einen Schnitt durch den Rastbeschlag entlang der Linie VI - VI in Fig. 5,

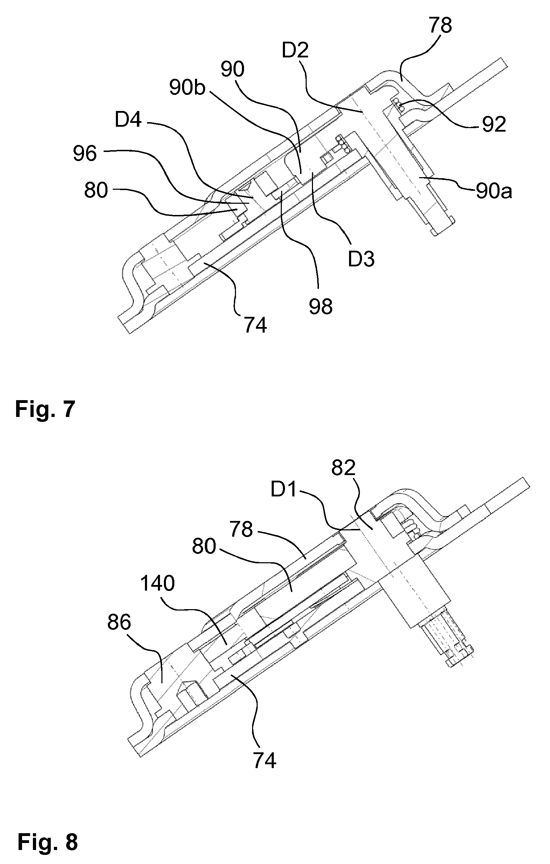

- Fig. 7:: einen Schnitt durch den Rastbeschlag entlang der Linie VII - VII in Fig. 5,
- Fig. 8:: einen Schnitt durch den Rastbeschlag entlang der Linie VIII - VIII in Fig. 5,
- Fig. 9:: eine Draufsicht auf den Rastbeschlag im verriegelten Zustand der Freischwenkvorrichtung ohne Deckel und ohne Rückhaltefeder,
- Fig. 10:: eine Fig. 9 entsprechende Ansicht während des Entriegelns der Freischwenkvorrichtung,

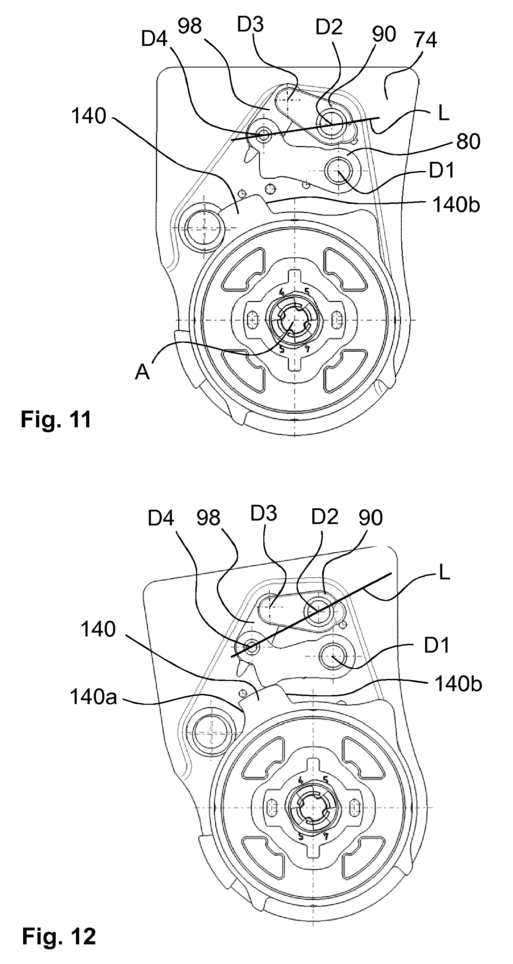

- Fig. 11:: eine Fig. 9 entsprechende Ansicht der vollständig entriegelten Freischwenkvorrichtung und
- Fig. 12:: eine Fig. 9 entsprechende Ansicht der entriegelten Freischwenkvorrichtung während des Freischwenkens der Lehne.

Ein Fahrzeugsitz 1 für ein Kraftfahrzeug weist ein Sitzteil 3 und eine relativ zum Sitzteil 3 in ihrer Neigung einstellbare Lehne 4 auf. Mittels eines Beschlagsystems 9 ist die Lehne 4 einerseits in ihrer Neigung relativ zum Sitzteil 3 einstellbar, wodurch mehrere Gebrauchsstellungen definiert werden, und andererseits freischwenkbar, d.h. nach vorne in eine Nichtgebrauchsstellung schwenkbar, um beispielsweise den Zugang zu einer hinteren Sitzreihe zu erleichtern. Das Beschlagsystem 9 weist auf jeder Fahrzeugsitzseite einen Beschlag auf.

Ein erster Beschlag 10 weist zwei Verriegelungsmechanismen auf. Ein erster Verriegelungsmechanismus wirkt zwischen einem ersten Beschlagteil 11 und einem zweiten Beschlagteil 12. Zusätzlich wirkt ein zweiter Verriegelungsmechanismus, der als integrierte Freischwenkvorrichtung ausgeführt ist, zwischen einer mit dem ersten Beschlagteil 11 verbundenen Rastplatte 115 und einem dritten Beschlagteil 74. In einer Abwandlung des Ausführungsbeispiels ist die Rastplatte 115 in das erste Beschlagteil 11 integriert.

Ein zweiter Beschlag 10a ist ohne zusätzliche Freischwenkvorrichtung ausgeführt, das heißt er weist nur einen ersten Verriegelungsmechanismus in einer scheibenförmigen Einheit auf. Die beiden Beschläge 10, 10a sind in einer in der DE 10 2008 026 176 A1 beschriebenen Weise über ein als Entriegelungswelle 7 ausgebildetes Übertagungselement miteinander gekoppelt. Die Entriegelungswelle 7 definiert die verwendeten Richtungsangaben eines Zylinderkoordinatensystems. Der erste Beschlag 10 mit Freischwenkvorrichtung wird nachfolgend als Rastbeschlag 10 bezeichnet.

Zur Neigungseinstellung der Lehne 4 wird manuell, beispielsweise mittels eines Bedienhebels 5, oder motorisch, beispielsweise mittels eines Elektromotors, die Entriegelungswelle 7 betätigt, welche horizontal im Übergangsbereich zwischen Sitzteil 3 und Lehne 4 angeordnet ist. Auf beiden Seiten des Fahrzeugsitzes 1 greift die Entriegelungswelle 7 derart in die beiden Beschläge 10, 10a ein, dass eine Drehung der Entriegelungswelle 7 um deren Längsachse die beiden ersten Verriegelungsmechanismen der Beschläge 10, 10a entriegelt, so dass die Neigung der Lehne 4 verändert werden kann. Die Freischwenkvorrichtung als zweiter Verriegelungsmechanismus des Rastbeschlags 10 bleibt dabei verriegelt.

Durch Betätigung eines Handhebels 8 wird die Freischwenkvorrichtung des Rastbeschlags 10 und der zweite Beschlag 10a entriegelt, so dass die Lehne freigeschwenkt werden kann. Der erste Verriegelungsmechanismus zwischen dem ersten Beschlagteil 11 und dem zweiten Beschlagteil 12 des Rastbeschlags 10 bleibt dabei verriegelt.

Nachfolgend ist der Rastbeschlag 10, das heißt der erste Beschlag mit zusätzlicher Freischwenkvorrichtung beschrieben. Das erste Beschlagteil 11 und das zweite Beschlagteil 12 des Rastbeschlags 10 sind relativ zueinander um eine Achse A verdrehbar. Die Achse A fluchtet vorliegend mit der Mittelachse der Entriegelungswelle 7. Die beiden Beschlagteile 11 und 12 lassen sich jeweils näherungsweise in eine kreisrunde Scheibenform einbeschreiben. Beide Beschlagteile 11 und 12 bestehen vorzugsweise aus Metall, insbesondere aus Stahl, der wenigstens bereichsweise gehärtet sein kann. Zur Aufnahme der axial wirkenden Kräfte, also zum axialen Zusammenhalt der Beschlagteile 11 und 12, ist ein Umklammerungsring 13 vorgesehen. Der Umklammerungsring 13 besteht vorzugsweise aus Metall, insbesondere Stahl, der vorzugsweise ungehärtet ist. Der Umklammerungsring 13 weist vorzugsweise eine im Wesentlichen flache Ringform auf, kann aber in alternativer Ausführung L-förmig profiliert mit einem Zylinderabschnitt und stirnseitig einem flachen Ringabschnitt sein.

Der Umklammerungsring 13 ist fest mit einem der beiden Beschlagteile 11 und 12 verbunden, vorliegend in einem äußeren Ringabschnitt mit dem zweiten Beschlagteil 12, beispielsweise mittels Laserschweißens oder mittels einer anderen an sich bekannten Befestigungstechnik. Mittels eines inneren Ringabschnittes, welcher in einer zur axialen Richtung senkrechten Ebene angeordnet ist, übergreift der Umklammerungsring 13, gegebenenfalls unter Zwischenlage eines Gleitrings, das erste Beschlagteil 11 in dessen radial äußerem Randbereich, ohne die Relativbewegung der beiden Beschlagteile 11 und 12 zu behindern. Zudem werden die einander zugewandten Innenflächen der beiden Beschlagteile 11 und 12 vor dem Eindringen von Fremdkörpern und der Verschmutzung und Beschädigung geschützt.

Der Umklammerungsring 13 und das mit ihm fest verbundene Beschlagteil 11 oder 12 umklammern also das relativ zu ihnen bewegliche, andere der beiden Beschlagteile 11 und 12. In baulicher Hinsicht bilden die beiden Beschlagteile 11 und 12 daher zusammen (mit dem Umklammerungsring 13) eine scheibenförmige Einheit als Unterbaugruppe des Rastbeschlags 10.

Mit der Montage des Rastbeschlages 10 ist das zweite Beschlagteil 12 mittels eines Adapters 112 fest mit der Struktur des Sitzteils 3 verbunden, also sitzteilfest. Das erste Beschlagteil 11 ist fest mit der nachfolgend näher beschriebenen Rastplatte 115 verbunden, vorliegend verschweißt. Die Rastplatte 115 ist mittels eines nachfolgend näher beschriebenen Klinkensystems mit dem dritten Beschlagteil 74 verriegelbar. Das dritte Beschlagteil 74 ist relativ drehbar zu dem ersten Beschlagteil 11 gelagert. Dazu ist ein Lagerring 71 mit dem ersten Beschlagteil 11 verschweißt, der das dritte Beschlagteil 74 drehbar lagert. Das dritte Beschlagteil 74 ist mit der Struktur der Lehne 4 fest verbunden.
Die Zuordnungen der Beschlagteile 12 und 74 können jedoch auch vertauscht sein, d.h. das dritte Beschlagteil 74 wäre dann sitzteilfest und das zweite Beschlagteil 12 lehnenfest. Der Rastbeschlag 10 liegt im Kraftfluss zwischen Lehne 4 und Sitzteil 3.

Der erste Verriegelungsmechanismus des Rastbeschlags 10 ist als ein Beschlag ausgebildet, bei welchem das erste Beschlagteil 11 und das zweite Beschlagteil 12 miteinander verriegelbar sind, wie es beispielsweise in der
DE 10 2006 015 560 B3 beschrieben ist, deren diesbezüglicher Offenbarungsgehalt ausdrücklich einbezogen wird. Die DE 10 2010 020 013 A1 offenbart ebenfalls einen solchen Beschlag.

Das zweite Beschlagteil 12 weist - vorliegend vier - Führungssegmente 14 auf, welche mit geraden Führungsflächen paarweise jeweils einen Riegel 16 seitlich in radialer Richtung führen. Die - vorliegend insgesamt vier - Riegel 16 sind - vorliegend um je 90°- versetzt zueinander in einem zwischen den beiden Beschlagteilen 11 und 12 definierten Bauraum angeordnet. Die Riegel 16 sind an ihrem radial außen liegenden Ende mit einer Verzahnung versehen, die mit einem Zahnkranz des als Hohlrad ausgebildeten ersten Beschlagteils 11 in Eingriff gelangen (einfallen) kann. Wenn der Zahnkranz und die Riegel 16 zusammenwirken, ist der erste Verriegelungsmechanismus des Rastbeschlags 10 verriegelt. In alternativer Ausführung beträgt die Anzahl der Riegel 16 eins, zwei, drei oder mehr als vier.

Im Zentrum des Rastbeschlags 10 ist ein Mitnehmer 21 angeordnet. Der Mitnehmer 21 erstreckt sich in Richtung der Achse A und ist um die Achse A herum mit einer Durchgangsöffnung zur Aufnahme der Entriegelungswelle 7 versehen.

Auf dem Mitnehmer 21 sitzt drehfest ein Exzenter 27, welcher in dem zwischen den Beschlagteilen 11 und 12 definierten Bauraum angeordnet ist. Eine Federanordnung 35 ist in einer zentralen Aufnahme eines der beiden Beschlagteile 11 und 12, vorliegend des zweiten Beschlagteils 12, angeordnet und vorliegend außen an diesem abgestützt. Die Federanordnung 35 beaufschlagt den Exzenter 27, vorliegend indem sie innen drehfest auf einem im Querschnitt annähernd quadratisch ausgeführten Profilabschnitt des Mitnehmers 21 sitzt. Eine derartige Federanordnung 35 ist beispielsweise in der DE 10 2005 046 807 B3 beschrieben, deren diesbezüglicher Offenbarungsgehalt ausdrücklich einbezogen wird. Der von der Federanordnung 35 beaufschlagte Exzenter 27 wirkt auf die radial beweglichen Riegel 16 ein und beaufschlagt diese, so dass sie radial nach außen gedrückt werden, um in den Zahnkranz einzufallen, womit der erste Verriegelungsmechanismus des Rastbeschlags 10 verriegelt ist.

Eine Steuerscheibe 36 ist im Bauraum axial zwischen den Riegeln 16 und dem ersten Beschlagteil 11 angeordnet und sitzt vorliegend drehfest auf dem Exzenter 27. Die Steuerscheibe 36 weist - vorliegend vier - Steuerbahnen auf, die jeweils mit einer Nase 38 jedes Riegels 16 zusammenwirken. Die Nasen 38 stehen dabei in axialer Richtung von den ihnen zugeordneten Riegeln 16 ab. Bei einer Drehung (um wenige Grad) des Mitnehmers 21 - und des damit angetriebenen Exzenters 27 und der Steuerscheibe 36 - entgegen der Kraft der Federanordnung 35 zieht die Steuerscheibe 36 die Riegel 16 radial nach innen, d.h. aus dem Zahnkranz, womit der Rastbeschlag 10 entriegelt ist und die beiden Beschlagteile 11 und 12 relativ zueinander um die Achse A verdrehbar sind. Die Lehne 4 ist nun um die Achse A schwenkbar, um ihre Neigung einzustellen, d.h. um eine andere Gebrauchsstellung einzunehmen. Ein Befestigungsring 24 ist mit einem aus dem zweiten Beschlagteil 12 herausragendem Ende des Mitnehmers 21 fest verbunden.

Nach der Befestigung des Rastbeschlags 10 an den Fahrzeugsitz 1 steht das erste Beschlagteil 11 in (verriegelter) Verbindung mit der Lehne 4, solange die nachfolgend beschriebene Freischwenkverriegelung nicht entriegelt ist. Das zweite Beschlagteil 12 ist fest über den Adapter 112 mit der Struktur des Sitzteils 3 verbunden, also sitzteilfest. Die Zuordnungen der Beschlagteile 11 und 12 können jedoch auch vertauscht sein, d.h. das erste Beschlagteil 11 wäre dann sitzteilfest und das zweite Beschlagteil 12 stünde in Verbindung mit der Lehne 4. Der Rastbeschlag 10 liegt also im Kraftfluss zwischen der Lehne 4 und dem Sitzteil 3, weshalb die beiden Beschlagteile 11 und 12 vorzugsweise aus Metall bestehen, insbesondere aus Stahl.

Der Insasse des Fahrzeugsitzes 1 kann die Lehnenneigung an seine individuellen Komfortbedürfnisse anpassen. Der Komforteinstellbereich der Lehne ist begrenzt, indem ein fest mit dem sitzteilfesten Adapter 112 verbundener Anschlag 112a zwischen einen ersten Nocken 120 und einen zweiten Nocken 130 der Rastplatte 115 greift. Der erste Nocken 120 und der zweite Nocken stehen als Funktionsgeometrien in radialer Richtung über eine konzentrisch zur Achse A verlaufende kreisrunde Grundgeometrie der Rastplatte 115 über. Am ersten Nocken 120 ist eine dem Anschlag 112a zugewandte erste Anschlagfläche 120a und am zweiten Nocken 130 eine dem Anschlag 112a zugewandte zweite Anschlagfläche 130a ausgebildet, von denen jeweils eine in einem der beiden Endpunkten des Komfortverstellbereiches der Lehne an dem Anschlag 112a anliegt und ein weiteres Verstellen des Rastbeschlags 10 verhindert. Der Abstand zwischen erster Anschlagfläche 120a und zweiter Anschlagfläche 130a ist größer als die Abmessung des zwischen diesen liegenden Anschlags 112a, wodurch der Komforteinstellbereich der Lehne definiert ist.

Die Rastplatte 115 ist mit einer kreisrunden Öffnung, die konzentrisch zur Achse A liegt, auf eine kreisrunde Stufe des ersten Beschlagteils 11 aufgeschoben, die ebenfalls konzentrisch zur Achse A liegt. Die Rastplatte 115 ist vorzugsweise mit dem ersten Beschlagteil laserverschweißt. Die Stufe hat einen Durchmesser D von vorzugsweise 60mm und dient in Anwendungen des Rastbeschlags 10 ohne Freischwenkvorrichtung der Anbindung des ersten Beschlagteils 11 an die Sitzstruktur, vorzugsweise an die Struktur einer Lehne 4.

Der Rastbeschlag 10 umfasst außer der besagten scheibenförmigen Einheit mit den darin enthaltenen Bauteilen des ersten Verriegelungsmechanismus auch noch eine Freischwenkvorrichtung als einen zweiten Verriegelungsmechanismus. Die beiden Verriegelungsmechanismen sind unabhängig voneinander bedienbar. Am ersten Beschlagteil 11 ist auf dessen vom zweiten Beschlagteil 12 abgewandten Seite, mittels des am ersten Beschlagteil 11 befestigten Lagerrings 71, das dritte Beschlagteil 74 gelagert. Das im Wesentlichen plattenförmige dritte Beschlagteil 74 ist mit der Lehnenstruktur der Lehne 4 verbunden und für das zentrisch erfolgende Freischwenken relativ zum ersten Beschlagteil 11 um die (durch den Lagerring 71 definierte) zentrale Achse A schwenkbar, die parallel zur Entriegelungswelle 7 liegt. Sofern nicht abweichend beschrieben, verlaufen sämtliche nachfolgend beschriebenen Drehungen um parallel zur Achse A ausgerichtete Drehachsen.

Der Lagerring 71 hat eine kreisringförmige Grundgeometrie mit einem umlaufend annähernd konstanten Querschnitt, der einen in Richtung der Achse A verlaufenden Steg und an den beiden Stegenden jeweils einen senkrecht zum Steg verlaufenden Schenkel aufweist. Die beiden Schenkel verlaufen dabei ausgehend von den Stegenden in radialen und zueinander entgegengesetzten Richtungen, so das der Querschnitt näherungsweise eine Z-Form aufweist.

Ein gegebenenfalls vorhandenes Spiel in dem Rastbeschlag 10 kann dadurch eingestellt werden, dass die Lagerfläche des Lagerrings 71 und die Innenfläche der Lageröffnung in dem dritten Beschlagteil 74 derart unrund ausgebildet sind, dass durch Verdrehen des Lagerrings 71 vor dessen Befestigung, insbesondere Laserverschweißung, an dem ersten Beschlagteil 11 das Spiel einstellbar ist. Eine solche Art der Einstellung des Spiels ist beispielsweise aus der DE 100 41 604 B4 bekannt.

Beim Gebrauch des Fahrzeugsitzes 1 ist das dritte Beschlagteil 74 mit dem ersten Beschlagteil 11 verriegelt. Dazu weist die am ersten Beschlagteil 11 befestigte Rastplatte 115 als weitere Funktionsgeometrie einen in radialer Richtung über die kreisrunde Grundgeometrie der Rastplatte 115 überstehenden Vorsprung 140 auf, der mit einer Klinke 80 zusammen wirkt, die mittels eines Lagerbolzens 82 am dritten Beschlagteil 74 auf der dem ersten Beschlagteil 11 zugewandten Seite drehbar gelagert ist.

Die Klinke 80 hat eine einer L-Form ähnliche Grundgeometrie mit einem langen Schenkel und einem kurzen Schenkel. Ein kreisrundes Loch im vom kurzen Schenkel abgewandten Endbereich des langen Schenkels dient der Aufnahme des Lagerbolzens 82 und bildet gemeinsam mit diesem die Lagerstelle der Klinke 80 in einem ersten Gelenkpunkt D1 am dritten Beschlagteil 74. Im Verbindungsbereich zwischen dem langen Schenkel und dem kurzen Schenkel der Klinke 80 ist ein Verriegelungsnocken 80a zum Zusammenwirken mit einer Verriegelungsfläche 140b des Vorsprungs 140 ausgeformt. Um das dritte Beschlagteil 74 mit dem ersten Beschlagteil 11 zu verriegeln, stützt sich der Verriegelungsnocken 80a in Freischwenkrichtung an der Verriegelungsfläche 140b des Vorsprungs 140 ab.

Ein als Anschlag dienender Exzenterbolzen 84 am dritten Beschlagteil 74 dient zur Begrenzung der Schwenkbewegung des dritten Beschlagteils 74 in Rückwärts-Schwenkrichtung der Lehne 2, indem der Exzenterbolzen 84 beim Wiedererreichen der Gebrauchsstellung der Lehne 4 nach Beendigung des Freischwenkens gegen eine Abstützfläche 140a des Vorsprungs 140 anläuft. Zum Ausgleich von Fertigungstoleranzen ist der Exzenterbolzen 84 in seiner axialen Richtung gestuft mit zueinander exzentrischen, weitgehend zylinderförmigen Stufen. Ein in ein kreisrundes Loch des dritten Beschlagteils 74 eingesteckter Zylinderabschnitt des Exzenterbolzens 84 ist in radialer Richtung um eine Exzentrizität radial versetzt zu einem weiteren Zylinderabschnitt des Exzenterbolzens 84, wobei letztgenannter Zylinderabschnitt beim Wiederreichen der Gebrauchsposition in Anlage mit der Abstützfläche 140a kommt. Bei einer Drehung des Exzenterbolzens 84 um den in das dritte Beschlagteil 74 eingesteckten Zylinderabschnitt bewegt sich der Mittelpunkt des in Anlage mit der Abstützfläche 140a kommenden Zylinderabschnitts dadurch auf einer Kreisbahn, dessen Radius der Exzentrizität entspricht. Bei der Montage des Beschlags wird der Exzenterbolzen 84 gegenüber dem dritten Beschlagteil 74 soweit verdreht, bis die Nennlage des dritten Beschlagteils 74 relativ zum ersten Beschlagteil 11 eingestellt ist; anschließend wird der Exzenterbolzen 84 am dritten Beschlagteil 74 fixiert, insbesondere mit diesem verschweißt.

Zum Ausgleich von Fertigungstoleranzen kann auch der Lagerbolzen 82 entsprechend exzentrisch gestuft aufgebaut sein. Ein in ein kreisrundes Loch des dritten Beschlagteils 74 eingesteckter Zylinderabschnitt des Lagerbolzens 82 hat dann eine Mittelachse, die radial versetzt zu einer den ersten Gelenkpunkt D1 definierenden, parallelen Mittelachse eines der Lagerung der Klinke 80 dienenden Zylinderabschnitts ist. Dadurch ist die Exzentrizität des Lagerbolzens 82 definiert. Bei einer Drehung des Lagerbolzens 82 um den in das dritte Beschlagteil 74 eingesteckten Zylinderabschnitt bewegt sich der erste Gelenkpunkt D1 auf einer Kreisbahn, dessen Radius der Exzentrizität entspricht. Bei der Montage des Beschlags wird der Lagerbolzen 82 gegenüber dem dritten Beschlagteil 74 soweit verdreht, bis der erste Gelenkpunkt D1 seine optimale Lage erreicht hat und die Klinke 80 mit einem maximalen Eingriff des Verriegelungsnockens 80a spielfrei an der Verriegelungsfläche 140b des Vorsprungs 140 in Eingriff steht, vorliegend innerhalb, alternativ außerhalb des Winkelbereichs der Selbsthemmung; anschließend wird der Lagerbolzen am dritten Beschlagteil 74 fixiert, insbesondere mit diesem verschweißt.

Ein Sperrnocken 90 ist in einem vom ersten Gelenkpunkt D1 beabstandeten zweiten Gelenkpunkt D2 auf der dem ersten Beschlagteil 11 zugewandten Seite drehbar am dritten Beschlagteil 74 gelagert. Dazu weist der Sperrnocken 90 an einem Ende einen senkrecht vom Sperrnocken 90 abstehenden, parallel zur Achse A verlaufenden Achsstummel 90a auf, der mittels einer Buchse 94 in eine Öffnung des dritten Beschlagteils 74 eingesetzt ist. Das freie Ende des Achsstummels 90a durchragt das dritte Beschlagteil 74 und steht auf der dem ersten Beschlagteil 11 abgewandten Seite über die im Wesentlichen plattenförmige Grundgeometrie des dritten Beschlagteils 74 über. Das freie Ende des Achsstummels 90a ist profiliert, insbesondere polygonförmig ausgebildet. Ein mit einem entsprechenden Gegenprofil ausgebildetes Bauteil kann in axialer Richtung aufgeschoben werden, so dass eine drehfeste Verbindung zwischen dem Achsstummel 90a und dem aufgeschobenen Bauteil gegeben ist. Das aufgeschobene Bauteil ist vorliegend ein in den Figuren nicht dargestellter Hebel, der über einen Seilzug mit dem im oberen Bereich der Lehne 4 befestigten Handhebel 8 in Wirkverbindung steht. Eine Betätigung des Handhebels 8 dreht den Achsstummel 90a und somit den Sperrnocken um den zweiten Gelenkpunkt D2.

Eine Koppel 98 mit ebener, länglicher Grundform, ist mit einem ersten Ende in einem dritten Gelenkpunkt D3 mit dem vom Achsstummel 90a abgewandten Ende des Sperrnockens 90 verbunden. Das zweite Ende der Koppel 98 ist in einem vierten Gelenkpunkt D4 mit dem kurzen Schenkel der Klinke 80 verbunden.

Der dritte Gelenkpunkt D3 ist durch einen zylindrischen Zapfen 90b gebildet, der am vom Achsstummel 90a abgewandten Ende des Sperrnockens 90 parallel zur Achse A absteht und in ein Langloch des ersten Endes der Koppel 98 greift. Aufgrund der Paarung des zylindrischen Zapfens 90b mit dem Langloch der Koppel 98 ist der dritte Gelenkpunkt D3 als Drehschubgelenk ausgebildet und ermöglicht so neben einer reinen Drehbewegung auch eine durch die Langlochgeometrie begrenzte Translation zwischen Koppel 98 und Sperrnocken 90.

Der vierte Gelenkpunkt D4 ist durch einen Niet 96 gebildet, der durch ein kreisrundes Loch des zweiten Endes der Koppel 98 und ein kreisrundes Loch im Endbereich des kurzen Schenkels der Klinke 80 gesteckt und derart vernietet ist, dass ein reines Drehgelenk entsteht.

Die im ersten Gelenkpunkt D1 an dem dritten Beschlagteil 74 gelagerte Klinke 80, der in dem zweiten Gelenkpunkt D2 an dem dritten Beschlagteil 74 gelagerte Sperrnocken 90 und die in dem dritten Gelenkpunkt D3 mit dem Sperrnocken 90 und in dem vierten Gelenkpunkt D4 mit der Klinke 80 gelenkig verbundene Koppel 98 definieren eine weitgehend ebene (am dritten Beschlagteil 74 angelenkte) Viergelenkkette, die dem Entriegeln und Verriegeln der Freischwenkfunktion dient.

Ein am dritten Beschlagteil 74 befestigter Deckel 78 deckt die vorgenannten Einzelteile der Freischwenkvorrichtung - wenigstens teilweise - ab und schützt diese vor Verschmutzung. Der Lagerbolzen 82, der Sperrnocken 90 und der Exzenterbolzen 84 sind zusätzlich zu deren Lagerung in den Löchern des dritten Beschlagteils 74 in einem gegenüberliegenden Lochbild im Deckel 78 abgestützt bzw. gelagert.

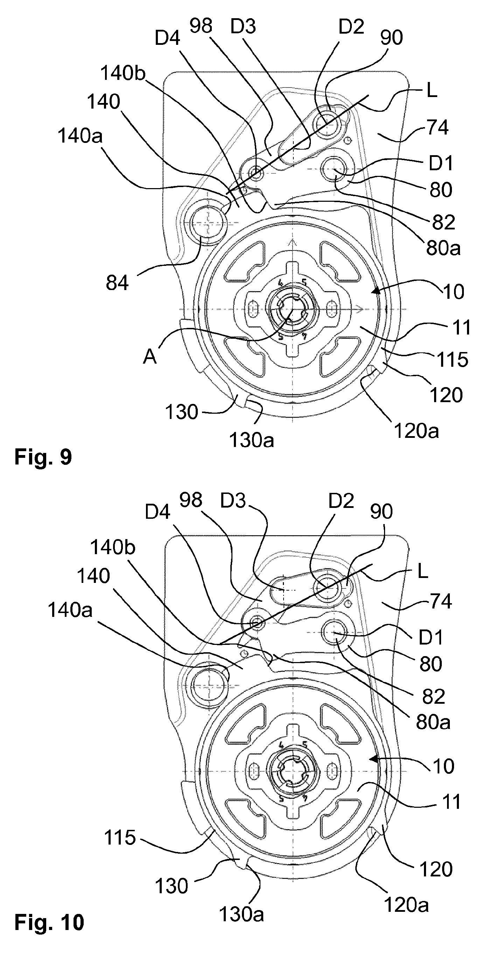

In einem verriegelten Zustand der Gebrauchsposition ist die Klinke 80 eingefallen, d.h. der Verriegelungsnocken 80a stützt sich an der Verriegelungsfläche 140b ab. Eine zwischen Sperrnocken 90 und drittem Beschlagteil 74 wirksame Feder 92 beaufschlagt den Sperrnocken 90 mit einem Drehmoment in Richtung einer Anlage an die Klinke 80 (in Fig. 9 gegen Uhrzeigersinn). Die Klinke 80 wird dadurch unter normalen Gebrauchslasten in ihrer verriegelten Position gehalten.

Der dritte Gelenkpunkt D3 liegt auf einer imaginären Verbindungslinie L zwischen dem zweiten Gelenkpunkt D2 und dem vierten Gelenkpunkt D4 oder (je nach Toleranzlage) geringfügig zwischen der Verbindungslinie L und der Klinke 80. Der Sperrnocken 90 und die Koppel 98 sind dadurch nahezu in einer Linie ausgerichtet. Der Nocken 90 stützt sich seitlich an der Klinke 80 ab, so dass sich der dritte Gelenkpunkt D3 nicht weiter in Richtung der Klinke 80 bewegen kann. Die Viergelenkkette befindet sich dadurch in einer gesperrten (Totpunkt-) Lage; auch hohe auf die Klinke 80 einwirkende Crashkräfte können die Klinke 80 aufgrund der Strecklage von Sperrnocken 90 und Koppel 98 und der Abstützung des Nockens 90 an der Klinke 80 nicht öffnen. Bei einer Ausbildung des dritten Gelenkpunktes D3 als Drehschubgelenk wird im Crashfall der kleine, begrenzte Translationsweg im Gelenk durchfahren, bis der Achsstummel 90a an einem Rand des Langloches der Koppel 98 anliegt.

Während des Entriegelns der Freischwenkfunktion wird durch eine Betätigung des Handhebels 8 der Sperrnocken 90 entgegen der Kraft der Feder 92 von der Klinke 80 weggeschwenkt. Der dritte Gelenkpunkt D3 wird auf die von der Klinke 80 abgewandte Seite der Verbindungslinie L bewegt. Der Sperrnocken 90 zieht mittels der Koppel 98 die Klinke 80 aus der verriegelten Position, so dass der Verriegelungsnocken 80a der Klinke 80 nicht mehr an der Verriegelungsfläche 140b anliegt und das dritte Beschlagteil 74 samt Lehne 4 in Freischwenkrichtung beweglich ist. Die Lehne 4 kann freigeschwenkt werden. Falls der dritte Gelenkpunkt D3 - wie zuvor beschrieben - im verriegelten Zustand der Freischwenkvorrichtung zwischen der Verbindungslinie L und der Klinke 80 liegt, so ermöglicht die Ausbildung des dritten Gelenkpunktes D3 als Drehschubgelenk dessen Überschreiten der Strecklage, also der Verbindungslinie L während des Entriegelungsvorgangs. In abgewandelter Ausführung ist statt des dritten Gelenkpunktes D3 einer der anderen Gelenkpunkte D1, D2, D4 als Drehschubgelenk ausgebildet. Die übrigen der Gelenkpunkte sind als reine Drehgelenke ausgebildet.

Um ein sicheres Entriegeln der Freischwenkfunktion unter allen Toleranzbedingungen zu ermöglichen, kann die Klinke 80 noch etwas weiter in die öffnende Richtung geschwenkt werden.

Während des Freischwenkvorgangs liegt der Verriegelungsnocken 80a der Klinke 80 auf der radial äußeren Begrenzung des Vorsprungs 140 auf und gleitet auf dieser ab. Der Handhebel 8 kann somit bereits nach einem kleinen Freischwenkwinkel unbetätigt bleiben. Das Zurückschwenken und Verriegeln des dritten Beschlagteils 74 und somit der Lehne 4 erfolgt in umgekehrter Reihenfolge.

Eine an dem Lagerbolzen 82 befestigte Rückhaltefeder 86 liegt mit einem Federarm 86a unter Vorspannung in axialer Richtung am Vorsprung 140 an. Wird das dritte Beschlagteil 74 weit nach vorne geschwenkt, so verlässt der Federarm 86a den Vorsprung 140 und federt in Richtung der Klinke 80, die dadurch an einem Einfallen hinter die Abstützfläche 140a gehindert wird.

Erfindungsgemäß ist der Vorsprung 140 an der Rastplatte 115 angeformt, d.h. er bildet einen einstückigen Bestandteil derselben in stofflicher Einheit und ist kein separat hergestelltes, nachträglich befestigtes Bauteil. Vorzugsweise ist auch der erste Nocken 120 und der zweite Nocken 130 an der Rastplatte 115 (oder am Lagerring 71) angeformt.

Es sind verschiedene Ausführungen für den Vorsprung 140 und die Klinke 80 möglich. Die Klinke 80 kann in abgewandelter Ausführung mehrere Zähne aufweisen, die mit mehreren Zahnlücken im Vorsprung 140 zusammen wirken.

Die in der vorstehenden Beschreibung, den Ansprüchen und den Zeichnungen offenbarten Merkmale können sowohl einzeln als auch in Kombination für die Verwirklichung der Erfindung in ihren verschiedenen Ausgestaltungen von Bedeutung sein.

### Bezugszeichenliste

- 1: Fahrzeugsitz
- 3: Sitzteil
- 4: Lehne
- 5: Bedienhebel
- 7: Entriegelungswelle
- 8: Handhebel
- 9: Beschlagsystem
- 10: erster Beschlag, Rastbeschlag
- 10a: zweiter Beschlag
- 11: erstes Beschlagteil
- 12: zweites Beschlagteil
- 13: Umklammerungsring
- 14: Führungssegment
- 16: Riegel
- 21: Mitnehmer
- 24: Befestigungsring
- 27: Exzenter
- 35: Federanordnung
- 36: Steuerscheibe
- 38: Nase
- 71: Lagerring
- 74: drittes Beschlagteil
- 78: Deckel
- 80: Klinke
- 80a: Verriegelungsnocken
- 82: Lagerbolzen
- 84: Exzenterbolzen
- 86: Rückhaltefeder
- 86a: Federarm
- 90: Sperrnocken
- 90a: Achsstummel
- 90b: Zapfen
- 92: Feder
- 94: Buchse
- 96: Niet
- 98: Koppel
- 112: Adapter
- 112a: Anschlag
- 115: Rastplatte
- 120: erster Nocken
- 120a: erste Anschlagfläche
- 130: zweiter Nocken
- 130a: zweite Anschlagfläche
- 140: Vorsprung
- 140a: Abstützfläche
- 140b: Verriegelungsfläche
- A: Achse
- D: Durchmesser
- D1: erster Gelenkpunkt
- D2: zweiter Gelenkpunkt
- D3: dritter Gelenkpunkt
- D4: vierter Gelenkpunkt
- L: Verbindungslinie (D2 zu D4)

## Patentansprüche

1. Rastbeschlag (10) für einen Fahrzeugsitz, insbesondere für einen Kraftfahrzeugsitz, mit
a) einem ersten Beschlagteil (11) und einem zweiten Beschlagteil (12), welche relativ zueinander verdrehbar sind,
b) Riegeln (16), welche in einem der beiden Beschlagteile (11, 12) zwischen einem verriegelten Zustand und einem entriegelten Zustand beweglich geführt sind, und welche im verriegelten Zustand mit einem Zahnkranz des anderen der beiden Beschlagteile (11, 12) zusammenwirken, um den Rastbeschlag (10) zu verriegeln, und
c) einem dritten Beschlagteil (74), welches relativ zu dem ersten Beschlagteil (11) schwenkbar gelagert ist, wobei das dritte Beschlagteil (74) mittels einer in einem ersten Gelenkpunkt (D1) an dem dritten Beschlagteil (74) gelagerten Klinke (80) mit einer an dem ersten Beschlagteil (11) befestigten Rastplatte (115) oder dem ersten Beschlagteil (11) verriegelbar ist,
**dadurch gekennzeichnet, dass**
d) das dritte Beschlagteil (74), ein in einem zweiten Gelenkpunkt (D2) an dem dritten Beschlagteil (74) gelagerter Sperrnocken (90), eine in einem dritten Gelenkpunkt (D3) mit dem Sperrnocken (90) und in einem vierten Gelenkpunkt (D4) mit der Klinke (80) gelenkig verbundene Koppel (98), und die Klinke (80), eine Viergelenkkette (74, 80, 98, 90) definieren.

2. Rastbeschlag (10) nach Anspruch 1, **dadurch gekennzeichnet, dass** mindestens einer der Gelenkpunkte (D1, D2, D3, D4) der Viergelenkkette (74, 80, 98, 90) als Drehschubgelenk ausgebildet ist und die übrigen Gelenkpunkte (D1, D2, D3, D4) als Drehgelenke ausgebildet sind.

3. Rastbeschlag (10) nach Anspruch 2, **dadurch gekennzeichnet, dass** der zweite Gelenkpunkt (D2) als Drehschubgelenk ausgebildet ist und die übrigen Gelenkpunkte (D1, D3, D4) als Drehgelenke ausgebildet sind.

4. Rastbeschlag (10) nach einem der vorhergehenden Ansprüche, **dadurch gekennzeichnet, dass** eine Feder (92) die Viergelenkkette (74, 80, 98, 90), in Richtung der verriegelten Position der Klinke (80) vorspannt.

5. Rastbeschlag (10) nach Anspruch 4, **dadurch gekennzeichnet, dass** die Feder (92) den Sperrnocken (90) in Richtung der verriegelten Position der Klinke (80) vorspannt.

6. Rastbeschlag (10) nach Anspruch 4 oder 5, **dadurch gekennzeichnet, dass** die Feder (92) den Sperrnocken (90) in Anlage an die Klinke (80) schwenkt.

7. Rastbeschlag (10) nach einem der Ansprüche 4 bis 6, **dadurch gekennzeichnet, dass** der Sperrnocken (90) zum Entriegeln der Klinke (80) entgegen der Kraft der Feder (92) geschwenkt wird und dabei die Viergelenkkette (74, 80, 98, 90) die Klinke (80) in Richtung deren entriegelter Position bewegt.

8. Rastbeschlag (10) nach einem der vorhergehenden Ansprüche, **dadurch gekennzeichnet, dass** im verriegelten Zustand der Klinke (80) der dritte Gelenkpunkt (D3) auf einer imaginären Verbindungslinie (L) zwischen dem zweiten Gelenkpunkt (D2) und dem vierten Gelenkpunkt (D4) liegt.

9. Rastbeschlag (10) nach einem der Ansprüche 1 bis 7, **dadurch gekennzeichnet, dass** im verriegelten Zustand der Klinke (80) der dritte Gelenkpunkt (D3) zwischen einer imaginären Verbindungslinie (L) zwischen dem zweiten Gelenkpunkt (D2) und dem vierten Gelenkpunkt (D4) und der Klinke (80) liegt.

10. Rastbeschlag (10) nach Anspruch 8 oder 9, **dadurch gekennzeichnet, dass** während des Entriegelungsvorgangs der Klinke (80) der dritte Gelenkpunkt (D3) mittels der Viergelenkkette (74, 80, 98, 90) auf die von der Klinke (80) abgewandte Seite der Verbindungslinie (L) bewegt wird.

11. Rastbeschlag (10) nach einem der vorhergehenden Ansprüche, **dadurch gekennzeichnet, dass** der Sperrnocken (90) einen Achsstummel (90a) umfasst, der unter Bildung des zweiten Gelenkpunkts (D2) in einer Öffnung des dritten Beschlagteils (74) drehbar gelagert ist und der Achsstummel (90a) eine Schnittstelle zur wenigstens mittelbaren Verbindung mit einem Handhebel (8) aufweist.

12. Rastbeschlag (10) nach Anspruch 11, **dadurch gekennzeichnet, dass** der Achsstummel (90a) eine Schnittstelle in Polygonform aufweist.

13. Rastbeschlag (10) nach einem der vorhergehenden Ansprüche, **dadurch gekennzeichnet, dass** ein Lagerring (71) mit dem ersten Beschlagteil (11) verbunden ist, und der Lagerring (71) das dritte Beschlagteil (74) relativ zu dem ersten Beschlagteil (11) lagert.

14. Rastbeschlag (10) nach Anspruch 12, **dadurch gekennzeichnet, dass** der Lagerring (71) mit dem ersten Beschlagteil (11) verschweißt ist.

15. Fahrzeugsitz (1), insbesondere Kraftfahrzeugsitz, mit wenigstens einem Rastbeschlag (10) nach einem der vorhergehenden Ansprüche, mit einem Sitzteil (3), welches mit dem zweiten Beschlagteil (12) verbunden ist, und mit einer Lehne (4), welche mit dem dritten Beschlagteil (74) verbunden ist.

## Claims

1. A detent fitting (10) for a vehicle seat, in particular for a motor vehicle seat, comprising
a) a first fitting part (11) and a second fitting part (12) which are rotatable relative to each other,
b) catches (16) which are guided movably in one of the two fitting parts (11, 12) between a locked state and an unlocked state, and which, in the locked state, interact with a toothed ring of the other of the two fitting parts (11, 12) in order to lock the detent fitting (10), and
c) a third fitting part (74) which is mounted pivotably relative to the first fitting part (11), wherein the third fitting part (74) is lockable with a detent plate (115) fastened to the first fitting part (11) or with the first fitting part (11) by means of a pawl (80) which is mounted in a first hinge point (D1) on the third fitting part (74),
**characterized in that**
d) the third fitting part (74), a locking cam (90) which is mounted in a second hinge point (D2) on the third fitting part (74), a coupler (98) which is connected in an articulated manner to the locking cam (90) in a third hinge point (D3) and to the pawl (80) in a fourth hinge point (D4), and the pawl (80) define a four-bar chain (74, 80, 98, 90).

2. The detent fitting (10) as claimed in claim 1, **characterized in that** at least one of the hinge points (D1, D2, D3, D4) of the four-bar chain (74, 80, 98, 90) is designed as a turning and sliding joint and the remaining hinge points (D1, D2, D3, D4) are designed as turning joints.

3. The detent fitting (10) as claimed in claim 2, **characterized in that** the second hinge point (D2) is designed as a turning and sliding joint and the remaining hinge points (D1, D3, D4) are designed as turning joints.

4. The detent fitting (10) as claimed in one of the preceding claims, **characterized in that** a spring (92) prestresses the four-bar chain (74, 80, 98, 90) in the direction of the locked position of the pawl (80).

5. The detent fitting (10) as claimed in claim 4, **characterized in that** the spring (92) prestresses the locking cam (90) in the direction of the locked position of the pawl (80).

6. The detent fitting (10) as claimed in claim 4 or 5, **characterized in that** the spring (92) pivots the locking cam (90) into contact against the pawl (80).

7. The detent fitting (10) as claimed in one of claims 4 to 6, **characterized in that**, in order to unlock the pawl (80), the locking cam (90) is pivoted counter to the force of the spring (92) and, in the process, the four-bar chain (74, 80, 98, 90) moves the pawl (80) in the direction of the unlocked position thereof.

8. The detent fitting (10) as claimed in one of the preceding claims, **characterized in that**, in the locked state of the pawl (80), the third hinge point (D3) lies on an imaginary connecting line (L) between the second hinge point (D2) and the fourth hinge point (D4).

9. The detent fitting (10) as claimed in one of claims 1 to 7, **characterized in that**, in the locked state of the pawl (80), the third hinge point (D3) lies between an imaginary connecting line (L) between the second hinge point (D2) and the fourth hinge point (D4) and the pawl (80).

10. The detent fitting (10) as claimed in claim 8 or 9, **characterized in that**, during the unlocking operation of the pawl (80), the third hinge point (D3) is moved by means of the four-bar chain (74, 80, 98, 90) onto that side of the connecting line (L) which faces away from the pawl (80).

11. The detent fitting (10) as claimed in one of the preceding claims, **characterized in that** the locking cam (90) comprises a bearing journal (90a) which is mounted rotatably in an opening of the third fitting part (74), thus forming the second hinge point (D2), and the bearing journal (90a) has an interface for the at least indirect connection to a hand lever (8).

12. The detent fitting (10) as claimed in claim 11, **characterized in that** the bearing journal (90a) has an interface in polygonal form.

13. The detent fitting (10) as claimed in one of the preceding claims, **characterized in that** a bearing ring (71) is connected to the first fitting part (11), and the bearing ring (71) supports the third fitting part (74) relative to the first fitting part (11).

14. The detent fitting (10) as claimed in claim 12, **characterized in that** the bearing ring (71) is welded to the first fitting part (11).

15. A vehicle seat (1), in particular motor vehicle seat, with at least one detent fitting (10) as claimed in one of the preceding claims, with a seat part (3) which is connected to the second fitting part (12), and with a backrest (4) which is connected to the third fitting part (74).

## Revendications

1. Ferrure à cran d'arrêt (10) pour un siège de véhicule, en particulier pour un siège de véhicule automobile, comprenant
a) une première partie de ferrure (11) et une deuxième partie de ferrure (12), qui peuvent tourner l'une par rapport à l'autre,
b) des verrous (16) qui sont guidés de manière déplaçable dans l'une des deux parties de ferrure (11, 12) entre un état verrouillé et un état déverrouillé et qui, dans l'état verrouillé, coopèrent avec une couronne dentée de l'autre des deux parties de ferrure (11, 12), afin de verrouiller la ferrure à cran d'arrêt (10), et
c) une troisième partie de ferrure (74), qui est montée de manière à pouvoir pivoter par rapport à la première partie de ferrure (11), la troisième partie de ferrure (74) pouvant être verrouillée au moyen d'un cliquet (80) supporté dans un premier point d'articulation (D1) sur la troisième partie de ferrure (74) avec une plaque d'encliquetage (115) fixée à la première partie de ferrure (11) ou avec la première partie de ferrure (11),
**caractérisée en ce que**
d) la troisième partie de ferrure (74), une came de blocage (90) supportée dans un deuxième point d'articulation (D2) sur la troisième partie de ferrure (74), une bielle (98) connectée de manière articulée dans un troisième point d'articulation (D3) à la came de blocage (90) et dans un quatrième point d'articulation (D4) au cliquet (80), et le cliquet (80) définissent une chaîne cinématique à quadrilatère articulé (74, 80, 98, 90).

2. Ferrure à cran d'arrêt (10) selon la revendication 1, **caractérisée en ce qu'**au moins l'un des points d'articulation (D1, D2, D3, D4) de la chaîne cinématique à quadrilatère articulé (74, 80, 98, 90) est réalisé sous forme d'articulation à tiroir rotatif et les autres points d'articulation (D1, D2, D3, D4) sont réalisés sous forme d'articulations rotatives.

3. Ferrure à cran d'arrêt (10) selon la revendication 2, **caractérisée en ce que** le deuxième point d'articulation (D2) est réalisé sous forme d'articulation à tiroir rotatif et les autres points d'articulation (D1, D3, D4) sont réalisés sous forme d'articulations rotatives.

4. Ferrure à cran d'arrêt (10) selon l'une quelconque des revendications précédentes, **caractérisée en ce qu'**un ressort (92) de la chaîne cinématique à quadrilatère articulé (74, 80, 98, 90) est précontraint dans la direction de la position verrouillée du cliquet (80).

5. Ferrure à cran d'arrêt (10) selon la revendication 4, **caractérisée en ce que** le ressort (92) précontraint la came de blocage (90) dans la direction de la position verrouillée du cliquet (80).

6. Ferrure à cran d'arrêt (10) selon la revendication 4 ou 5, **caractérisée en ce que** le ressort (92) fait pivoter la came de blocage (90) en appui contre le cliquet (80).

7. Ferrure à cran d'arrêt (10) selon l'une quelconque des revendications 4 à 6, **caractérisée en ce que** la came de blocage (90) est pivotée à l'encontre de la force du ressort (92) pour déverrouiller le cliquet (80) et la chaîne cinématique à quadrilatère articulé (74, 80, 98, 90) déplace alors le cliquet (80) dans la direction de sa position déverrouillée.

8. Ferrure à cran arrêt (10) selon l'une quelconque des revendications précédentes, **caractérisée en ce que**, dans l'état verrouillé du cliquet (80), le troisième point d'articulation (D3) est situé sur une ligne de liaison imaginaire (L) entre le deuxième point d'articulation (D2) et le quatrième point d'articulation (D4).

9. Ferrure à cran d'arrêt (10) selon l'une quelconque des revendications 1 à 7, **caractérisée en ce que** dans l'état verrouillé du cliquet (80), le troisième point d'articulation (D3) est situé entre une ligne de liaison imaginaire (L) entre le deuxième point d'articulation (D2) et le quatrième point d'articulation (D4) et le cliquet (80).

10. Ferrure à cran d'arrêt (10) selon la revendication 8 ou 9, **caractérisée en ce que** pendant l'opération de déverrouillage du cliquet (80), le troisième point d'articulation (D3) est déplacé au moyen de la chaîne cinématique à quadrilatère articulé (74, 80, 98, 90) sur le côté de la ligne de liaison (L) opposé au cliquet (80).

11. Ferrure à cran d'arrêt (10) selon l'une quelconque des revendications précédentes, **caractérisée en ce que** la came de blocage (90) comprend un tronçon d'axe (90a) qui, en formant le deuxième point d'articulation (D2), est supporté à rotation dans une ouverture de la troisième partie de ferrure (74) et le tronçon d'axe (90a) présente une interface pour la connexion au moins indirecte avec un levier manuel (8).

12. Ferrure à cran d'arrêt (10) selon la revendication 11, **caractérisée en ce que** le tronçon d'axe (90a) présente une interface de forme polygonale.

13. Ferrure à cran d'arrêt (10) selon l'une quelconque des revendications précédentes, **caractérisée en ce qu'**une bague de palier (71) est connectée à la première partie de ferrure (11), et la bague de palier (71) supporte la troisième partie de ferrure (74) par rapport à la première partie de ferrure (11).

14. Ferrure à cran d'arrêt (10) selon la revendication 12, **caractérisée en ce que** la bague de palier (71) est soudée à la première partie de ferrure (11).

15. Siège de véhicule (1), en particulier siège de véhicule automobile, comprenant au moins une ferrure à cran d'arrêt (10) selon l'une quelconque des revendications précédentes, une partie de siège (3) qui est connectée à la deuxième partie de ferrure (12), et un dossier (4) qui est connecté à la troisième partie de ferrure (74).
